# EUROPÄISCHE PATENTSCHRIFT

(11) **EP 1 789 833 B1**
(45) Veröffentlichungstag und Bekanntmachung des Hinweises auf die Patenterteilung: **18.11.2009**
(21) Anmeldenummer: 05768103.3
(22) Anmeldetag: 15.07.2005
(51) Int. Cl.: G02B 27/09, G02B 5/18

(54) **OPTISCHES SYSTEM ZUR UMWANDLUNG EINER PRIMÄREN INTENSITÄTSVERTEILUNG IN EINE VORGEGEBENE, RAUMWINKELABHÄNGIGE INTENSITÄTSVERTEILUNG**
OPTICAL SYSTEM FOR CONVERTING A PRIMARY INTENSITY DISTRIBUTION INTO A PREDEFINED INTENSITY DISTRIBUTION THAT IS DEPENDENT ON A SOLID ANGLE
SYSTEME OPTIQUE POUR CONVERTIR UNE REPARTITION D'INTENSITE PRIMAIRE EN UNE REPARTITION D'INTENSITE ANGULAIRE DETERMINEE

(30) Priorität: 19.07.2004 DE 102004035489
(43) Veröffentlichungstag der Anmeldung: 30.05.2007
(73) Patentinhaber: JENOPTIK Laser, Optik, Systeme GmbH, 07745 Jena (DE)
(72) Erfinder: CUMME, Matthias, 07749 Jena (DE)
(74) Vertreter: Schaller, Renate
(86) Internationale Anmeldenummer: PCT/DE2005/001268
(87) Internationale Veröffentlichungsnummer: WO 2006/007828

(56) Entgegenhaltungen:
- US-A- 5 926 257
- US-A1- 2004 125 453
- US-A1- 2004 130 790
- XIN TAN ET AL: "DIFFRACTIVE PHASE ELEMENTS FOR BEAM SHAPING: A NEW DESIGN METHOD" APPLIED OPTICS, OSA, OPTICAL SOCIETY OF AMERICA, WASHINGTON, DC, US, Bd. 34, Nr. 8, 10. März 1995 (1995-03-10), Seiten 1314-1320, XP000491217 ISSN: 0003-6935
- SINGER W ET AL: "DIFFRACTIVE BEAMSHAPING ELEMENTS AT THE FABRICATION LIMIT" OPTICAL ENGINEERING, SOC. OF PHOTO-OPTICAL INSTRUMENTATION ENGINEERS. BELLINGHAM, US, Bd. 35, Nr. 10, Oktober 1996 (1996-10), Seiten 2779-2787, XP000634352 ISSN: 0091-3286

## Beschreibung

Die Erfindung bezieht sich auf ein Verfahren zur Umwandlung einer primären Intensitätsverteilung in eine vorgegebene, raumwinkelabhängige Intensitätsverteilung durch Erzeugen von ersten und zweiten homogenisierenden mikrooptische Strukturen, wobei die ersten mikrooptischen Strukturen dazu vorgesehen sind, aus der primären Intensitätsverteilung eine feinstrukturierte Amplituden- und Phasenverteilung zu erzeugen und die zweiten mikrooptischen Strukturen, aus dieser feinstrukturierten Amplituden- und Phasenverteilung die vorgegebene, raumwinkelabhängige Intensitätsverteilung zu generieren.

Beschrieben wird auch ein optisches System zur Umwandlung einer primären Intensitätsverteilung in eine vorgegebene, raumwinkelabhängige Intensitätsverteilung, das erste und zweite homogenisierende und/oder strahlformende mikrooptische Strukturen enthält, wobei die ersten mikrooptischen Strukturen dazu vorgesehen sind, aus der primären Intensitätsverteilung eine feinstrukturierte Amplituden- und Phasenverteilung zu erzeugen und die zweiten mikrooptischen Strukturen, aus dieser feinstrukturierten Amplituden- und Phasenverteilung die vorgegebene, raumwinkelabhängige Intensitätsverteilung zu generieren.

Das beschriebene optische System und das erfindungsgemäße Verfahren können zur homogenisierenden Strahlformung für kohärente oder partiell kohärente Laserquellen sowie für Strahlungsquellen eingesetzt werden, die in einem schmalen Spektralbereich emittieren.

Der industrielle und wissenschaftliche Einsatz von Laserstrahlquellen hat in den letzten Jahren in seiner Vielfalt und Häufigkeit enorm zugenommen. Wichtige Anwendungsgebiete finden sich z. B. in der Materialbearbeitung, der Medizintechnik, der Halbleiterindustrie sowie der Messtechnik, wobei der Laserstrahl z. B. als Werkzeug zum Abtragen von Material, für die definierte Beleuchtung oder auch zur Erfassung physikalischer kenngrößen eingesetzt wird. Der Grund für die breite Anwendung von Lasern liegt unter anderem in der physikalischen Eigenschaft der Laserstrahlung selbst, die sich durch gute Kollimierbarkeit und Fokusierbarkeit, Schmalbandigkeit sowie Kohärenz auszeichnet.

Trotz der genannten Vorteile ist es in den meisten Anwendungen notwendig, die vom Laser emittierte Strahlung durch geeignete Optiken zu modifizieren. Das trifft vor allem dann zu, wenn die in der Anwendung benötigte Intensitätsverteilung z. B. in ihrer räumlichen Ausdehnung oder Divergenz, in ihrem intensitätsprofil oder in der Homogenität von dem Strahl des eingesetzten Lasers abweicht.

So ist es in bestimmten Anwendungsfällen notwendig, Eingangsstrahlung mit asymmetrischem und inhomogenem Intensitätsprofil, wie sie beispielsweise von Excimerlasern emittiert wird, in eine homogene Intensitätsverteilung mit einem vorgegebenen Intensitätsprofil in einer bestimmten Ebene umzuwandeln. Solche homogenen Intensitätsverteilungen werden beispielsweise für die Materialbearbeitung oder auch für die Beleuchtung in lithographischen Anlagen benötigt.

Es ist bekannt, dass sich Linsenarray-Anordnungen zur Homogenisierung von Laserstrahlung, insbesondere von Excimerlaserstrahlung, eignen (DE 42 20 705 A1, DE 102 25 674 A1, DE 196 32 460 C1). Derartige Anordnungen arbeiten effizient und es lassen sich Intensitätsprofile mit guter Homogenität realisieren.
Eine wesentliche Einschränkung von Linsenarray-Homogenisatoren besteht jedoch darin, dass mit ihnen keine beliebigen Intensitätsverteilungen, wie z. B. ring- oder sternförmige Verteilungen realisierbar sind.

In der US 2004/139790 A1 werden Mikrolinsenarrays mit unterschiedlich ausgebildeten Mikrolinsen zur optischen Strahlformung und Homogenisierung beschrieben. Die Mikrolinsenarrays können vorderseitig auf einem optischen Träger aufgebracht sein, der rückseitig unter anderem eine diffraktive oder aufgeraute Struktur aufweisen kann. Da die optische Gesamtwirkung der vorgeschlagenen Mikrolinsenarrays als Faltung zweier Intensitätsverteilungen im Fernfeld zu betrachten sind, resultiert eine nachteilige Auflösungsverminderung.

Zur Bereitstellung unterschiedlich geformter Intensitätsverteilungen sind dagegen diffraktive optische Elemente geeignet, die durch eine computergenerierte beugende Struktur ein Strahlungsfeld durch komplexe Veränderungen der Amplitude und der Phase gezielt modifizieren.
(Gerchberg, R.W. and Saxton, W.O. (1972) "A practical algorithm for the determination of phase from image and diffraction plane pictures", Optik 35, 237-246,
Wyrowski, F. and Bryngdahl, O. (1988) "Iterative Fourier-transform algorithm applied to computer holography", J. Opt. Soc. Am. 5, 1958-1966,
Turunen, J. and Wyrowski, F. eds. "Diffractive Optics for Industrial and Commercial Applications", Akademie Verlag, Berlin, (1997))

Als diffraktive Homogenisierer setzen sich solche diffraktiven optischen Beugungselemente vorteilhaft aus einzelnen unterschiedlichen Facetten zusammen, die durch ihre individuellen beugenden Eigenschaften eine Umverteilung der Strahlungsenergie vornehmen (US 4 547 037).

Ein Nachteil diffraktiver Strukturen ist eine Empfindlichkeit gegenüber herstellungsbedingter Abweichungen des Oberflächenprofils vom berechneten Sollprofil. Insbesondere resultiert aus den Abweichungen der Profiltiefe und des Tastverhältnisses eine unter Umständen störende Intensitätserhöhung durch die nullte Beugungsordnung, die demjenigen Strahlungsanteil entspricht, der ungebeugt durch das diffraktive Element hindurchtritt und als sogenannter "hot spot" einen hellen punktförmigen Bereich im Zentrum einer flächig verteilten Strahlungsintensität bildet.

Zunehmend störend wirkt sich das Auftreten eines solchen "hot spots" mit Vergrößerung einer homogen zu bestrahlenden Fläche aus, da das Verhältnis der Lichtstärke dieses "hot spots" zur Lichtstärke seiner homogen ausgeleuchteten Umgebung einerseits von der Profilabweichung der diffraktiven Struktur und andererseits von der numerischen Apertur des optischen Beugungselementes abhängt.

Folglich zeigen diffraktive Homogenisierer mit gleicher Abweichung von Profiltiefe und Tastverhältnis, jedoch größerer numerischer Apertur "hot spots", deren Lichtstärke im Vergleich zur Lichtstärke der homogen beleuchteten Umgebung größer ist.

Da sich das Verhältnis der Intensität des "hot spots" zur Gesamtintensität des Eingangsstrahls durch technologische Maßnahmen zur Erhöhung der Genauigkeit der hergestellten diffraktiven Strukturen nur in Grenzen minimieren lässt, bereitet der Einsatz der diffraktiven Homogenisierer bei zunehmend größeren Aperturen häufig unüberwindliche Schwierigkeiten.

Bekannt geworden sind zur Reduzierung der bei Verwendung von polychromatischer Strahlung verstärkt auftretenden nullten Beugungsordnung diffraktive Strukturen gemäß der US 6 118 559, die drei Höhenniveaus aufweisen, von denen zwei benachbarte Höhenniveaus eine Phasenverschiebung von π erzeugen. Die beschriebenen Strukturen eignen sich ebenfalls zur Reduzierung des Einflusses technologiebedingter Profiltiefenfehler hinsichtlich des Auftretens der nullten Beugungsordnung, jedoch nicht, um den Einfluss von abweichenden Tastverhältnissen zu vermindern.
Außerdem sind mit zunehmender numerischer Apertur kleinere Abmaße für die diffraktiven Strukturen erforderlich, wodurch der Herstellung der dreistufigen Höhenprofile technologische Grenzen gesetzt sind, bei denen sich binäre Strukturen jedoch noch fertigen lassen.

Es besteht deshalb die Aufgabe, ein Verfahren zu finden, mit dem unter Ausnutzung der Vorteile von diffraktiven Strukturen bei der Bereitstellung unterschiedlich geformter Intensitätsverteilungen der störende Einfluss der nullten Beugungsordnung auch bei größer werdenden Aperturen über die durch die Fertigungsgenauigkeit bei der Herstellung der diffraktiven Strukturen festgelegten Grenzen hinaus verringert wird.

Diese Aufgabe wird durch die Merkmale des Patentanspruches 1 gelöst.
Von besonderer Bedeutung ist die gegenseitige Abstimmung der ersten und zweiten mikrooptischen Strukturen zueinander, damit ortsabhängig die gewünschte Intensitätsverteilung erzeugt werden kann.
Die Ausbildung der zweiten mikrooptischen Strukturen als diffraktive Strukturen und deren Anordnung in der im Nahfeld der ersten mikrooptischen Strukturen liegenden ersten Ebene gewährleistet die Unterdrückung des störenden Einflusses der nullten Beugungsordnung sowie die Formung beliebiger Intensitätsverteilungen.

Vorteilhaft können die ersten und die zweiten mikrooptischen Strukturen auf sich gegenüberliegenden Oberflächen eines gemeinsamen optischen Trägers aufgebracht sein. Es können aber auch einander zugewandte Oberflächen zweier benachbarter optischer Träger sein.
In einer bevorzugten Ausgestaltung sind die ersten mikrooptischen Strukturen als diffraktive Strukturen ausgebildet, die mindestens zwei Höhenniveaus aufweisen bzw. ein geblaztes Profil haben können. Dabei werden besonders Strukturen mit beugenden Eigenschaften ausgenutzt, die der primären Eingangswelle eine Phasenstruktur aufprägen, so dass bei der Wellenausbreitung die erwünscht Intensitätsverteilung entsteht.

Auch die zweiten diffraktiven mikrooptischen Strukturen können zwei oder mehr Höhenniveaus aufweisen bzw. ein geblaztes Profil haben.

Beide mikrooptischen Strukturen können auch gradienten-indexmoduliert sein.

Eine besondere Ausgestaltung eines optischen Systems zur Durchführung des erfindungsgemäßen Verfahrens sieht vor, dass die mikrooptischen Strukturen facettenförmig aufgebaut sind und sich die diffraktiven Strukturen unterschiedlicher Facetten unterscheiden.
Die Facetten können regelmäßig ausgebildet sein, sollten aber vorteilhaft eine unregelmäßige Form aufweisen, insbesondere können Anordnungen gewählt werden, in denen vollständige flächenhafte Bedeckungen mit Facetten realisiert sind, die sich in Form und/oder Größe.

Das hat den Vorteil, dass auch bei einer noch partiell vorliegenden Kohärenz keine Musterbildung durch eventuelle Interferenzen entsteht, wie etwa bei einem periodischen Gitter.

Alternativ zur vorgenannten Ausgestaltung der ersten mikrooptischen Strukturen als diffraktive binäre Strukturen können diese auch als refraktive Linsenarray-Anordnung ausgebildet sein.
Da refraktive Linsenarrays so ausgebildet werden können, dass sie keine zentrale Intensitätsüberhöhung ähnlich einer nullten Beugungsordnung erzeugen, wird das Gesamtsystem höchstens einen Anteil einer nullten Beugungsordnung von den zweiten diffraktiven mikrooptischen Strukturen enthalten, so dass auch in diesem Fall eine Reduzierung des Störanteils gegenüber dem Einsatz einer einzelnen diffraktiven Struktur erreicht werden kann, ohne auf die vorteilhaften Eigenschaften der diffraktiven Strukturen verzichten zu müssen.
Mit den ersten mikrooptischen Strukturen wird nicht nur in der ersten Ebene die feinstrukturierte Amplituden- und Phasenverteilung generiert, sondern es wird in der zweiten Ebene auch eine Intensitätsverteilung erzeugt, die sich über einen Raumwinkelbereich erstreckt, der von dem vom Gesamtsystem der ersten und der zweiten mikrooptischen Strukturen umfassten Raumwinkelbereich abweicht.

Vorteilhaft weist die mit den ersten mikrooptischen Strukturen in der zweiten Ebene erzeugte Intensitätsverteilung eine Gaußform auf und erstreckt sich über einen Raumwinkelbereich, der kleiner ist als der vom Gesamtsystem der ersten und der zweiten mikrooptischen Strukturen umfasste Raumwinkelbereich.

Das erfindungsgemäße Verfahren soll nachstehend anhand der schematischen Zeichnung näher erläutert werden. Es zeigen:
- Fig. 1 a: eine skizzenhafte Darstellung der auf einem optischen Träger aufgebrachten mikrooptischen Strukturen
- Fig. 1b: eine skizzenhafte Darstellung der auf zwei benachbarten optischen Trägern aufgebrachten mikrooptischen Strukturen
- Fig. 2: die Intensitätsverteilung bei der Strahlformung mit ersten sowie mit ersten und zweiten mikrooptischen Strukturen
- Fig. 3a: das Hervortreten der nullten Beugungsordnung aus dem Intensitätsprofil bei Verwendung von nur einer mikrooptischen Struktur, deren Oberflächenprofil vom Sollprofil abweicht
- Fig.3b: den mit der Kombination zweier mikrooptischer Strukturen bezüglich des Auftretens der nullten Beugungsordnung erzielbaren Effekt, wenn die zweite mikrooptische Struktur einen vergleichbaren Profilfehler aufweist wie in der Anordnung mit nur einer Struktur in Fig. 3a
- Fig. 3c: das Intensitätsprofil bei einer erfindungsgemäßen Anordnung, bei der jedoch beide mikrooptischen Strukturen ein fehlerhaftes Profil aufweisen
- Fig. 4: eine bevorzugte Ausführungsform mit zwei mikrostrukturierten Quarzsubstraten, deren strukturierte Oberflächen sich gegenüberliegen
- Fig. 5: Facettenelemente und vergrößerter Ausschnitt zweier Facettenelemente

Zur Durchführung des erfindungsgemäßen Verfahrens werden homogenisierende und/oder strahlformende mikrooptische Strukturen verwendet, die vereinfacht als mikrooptische Homogenisierungsstrukturen 1, 2 bezeichnet werden.

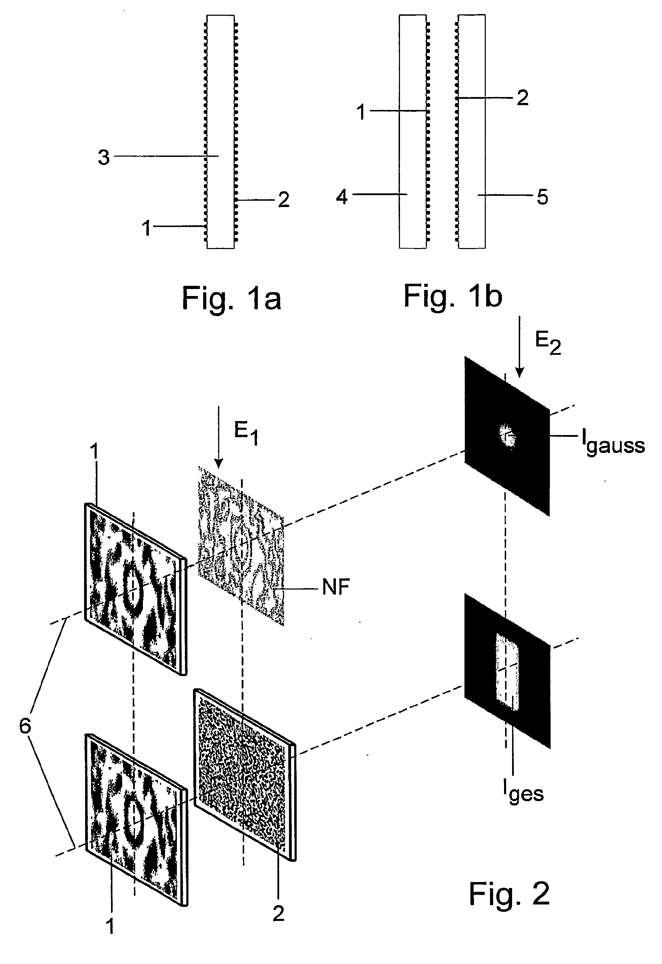

Die nacheinander angeordneten mikrooptischen Homogenisierungsstrukturen 1, 2 können entweder auf einem transparenten plattenförmigen optischen Träger 3 auf sich gegenüberliegenden Seitenflächen aufgebracht sein (Fig. 1a) oder es werden zwei benachbart angeordnete transparente plattenförmige optische Träger 4, 5 verwendet, bei denen einander zugewandte Oberflächen die mikrooptischen Homogenisierungsstrukturen 1, 2 aufweisen (Fig. 1 b).

Die mikrooptischen Homogenisierungsstrukturen 1, 2 können diffraktive binäre Strukturen oder diffraktive Strukturen mit mehreren Höhenniveaus oder refraktive Strukturen mit kontinuierlichem Höhenprofil, wie z. B. Linsenarray-Anordnungen enthalten. Deshalb können die Oberflächen der transparenten optischen Träger 3 - 5 diffraktive Strukturen aufweisen oder diffraktive und refraktive Strukturen werden kombiniert, indem eine erste Trägeroberfläche eine refraktive Linsenarray-Anordnung und eine zweite Trägeroberfläche diffraktive Strukturen enthält. Bevorzugt sind die mikrooptischen Homogenisierungsstrukturen 1, 2 Phasenstrukturen, können aber auch Amplitudenstrukturen sein.

Gemäß der Erfindung wird entsprechend Fig. 2 einem zu formenden und/oder homogenisierenden Eingangsstrahl 6 mit einer primären Intensitätsverteilung durch ein kombiniertes Zusammenwirken der beiden mikrooptischen Homogenisierungsstrukturen 1, 2 eine gewünschte optische Eigenschaft verliehen.

Zu diesem Zweck sind die ersten mikrooptischen Homogenisierungsstrukturen 1 so ausgeführt, dass im Fernfeld (zweite Ebene E₂) eine bestimmte, z. B. diffuse gaußförmige Intensitätsverteilung I_{gauss} erzeugt wird, die sich bevorzugt über einen kleineren Raumwinkelbereich erstreckt, als dem Raumwinkelbereich, der vom Gesamtsystem der beiden mikrooptischen Homogenisierungsstrukturen 1, 2 bestimmt wird. Unter dem Fernfeld der mikrooptischen Homogenisierungsstrukturen 1, 2 wird derjenige Bereich hinter den mikrooptischen Homogenisierungsstrukturen 1, 2 verstanden, bei dem sich die raumwinkelabhängige Intensitätsverteilung bei Abstandsvergrößerung nicht mehr verändert. In vielen Anwendungen ist es vorteilhaft, die Intensitätsverteilung des Fernfeldes mit einer unmittelbar hinter beiden Homogenisierungsstrukturen positionierten Sammellinse abzubilden. Die zweiten mikrooptischen Homogenisierungsstrukturen 2 sind den ersten mikrooptischen Homogenisierungsstrukturen 1 im Nahfeld (erste Ebene E₁) unmittelbar nachgeordnet, d. h. sie befinden sich in einem Bereich unmittelbar hinter den ersten mikrooptischen Homogenisierungsstrukturen 1, in dem die wesentlichen Merkmale der von den ersten mikrooptischen Homogenisierungsstrukturen 1 erzeugten Fernfeld-Intensitätsverteilung noch nicht erkennbar sind. Die ersten mikrooptischen Homogenisierungsstrukturen 1 erzeugen hier jedoch als Nahfeldverteilung NF eine Feinstruktur mit einer Amplituden- und Phasenverteilung, zu der die durch Computergenerierung an diese Verteilung im Design zugeschnittenen zweiten mikrooptischen Homogenisierungsstrukturen 2 exakt zu justieren sind, um die erforderliche Qualität der gewünschten Intensitätsverteilung des Gesamtsystems I_{ges} der ersten und zweiten mikrooptischen Homogenisierungsstrukturen 1, 2 hinsichtlich Kantensteilheit und Homogenität zu erhalten.

Die eng benachbarte Anordnung beider mikrooptischen Homogenisierungsstrukturen 1, 2 ist notwendig, da sich mit zunehmendem Abstand die Empfindlichkeit gegenüber Änderungen des Einfallswinkels erhöht. Eine gegenseitige Justierung bei einer Eingangsstrahlung, die ein Winkelspektrum enthält (z. B. in Anordnungen mit Excimerlasern), wäre bei zu großem Abstand nicht mehr möglich.

Außerdem ist es für eine hohe Effizienz erforderlich, möglichst die gesamte, von den ersten mikrooptischen Homogenisierungsstrukturen 1 weitergegebene Energie zu verarbeiten. Vergrößert sich der gegenseitige Abstand beider mikrooptischen Homogenisierungsstrukturen 1, 2 und wird eine große Apertur gewünscht, wäre eine dementsprechend große Fläche für die zweiten mikrooptischen Homogenisierungsstrukturen 2 erforderlich, wodurch ein erhöhter Kostenaufwand resultierten würde.

Die Grenze, mit der die beiden mikrooptischen Homogenisierungsstrukturen 1, 2 nacheinander angeordnet werden können, wird durch die geometrische Gestaltung (Durchbiegung, Keilfehler etc.) der optischen Träger 3 - 5 bestimmt, auf deren Oberflächen die mikrooptischen Homogenisierungsstrukturen 1, 2 aufgebracht sind.

Mit der Erfindung lässt sich der störende Einfluss der nullten Beugungsordnung, die z. B. durch Fehler bei der Herstellung diffraktiver mikrooptischer Homogenisierungsstrukturen bedingt sein kann, weitgehend minimieren.

Weist etwa das Oberflächenprofil der zweiten mikrooptischen Homogenisierungsstrukturen 2 durch Herstellungsfehler bedingte Abweichungen vom im Design ermittelten Idealprofil auf, werden die zweiten mikrooptischen Homogenisierungsstrukturen 2 einen gewissen Anteil der einfallenden Strahlung ungebeugt hindurchlassen. Da jedoch dieser Anteil bereits das von den ersten mikrooptischen Homogenisierungsstrukturen 1 erzeugte Winkelspektrum enthält, würde bei einer Ausführung entsprechend Fig. 2 zu der vom Gesamtsystem geformten homogenen Intensitätsverteilung I_{ges} noch die von den ersten mikrooptischen Homogenisierungsstrukturen 1 erzeugte diffuse gaußförmige Verseilung I_{gauss} anteilig hinzuaddiert werden. Im Vergleich zu einer Anordnung, die nur erste diffraktive mikrooptische Homogenisierungsstrukturen 1 enthält, wird der nichtgebeugte Anteil der nullten Beugungsordnung auf eine wesentlich größere Fläche verteilt und macht sich daher viel schwächer bemerkbar.

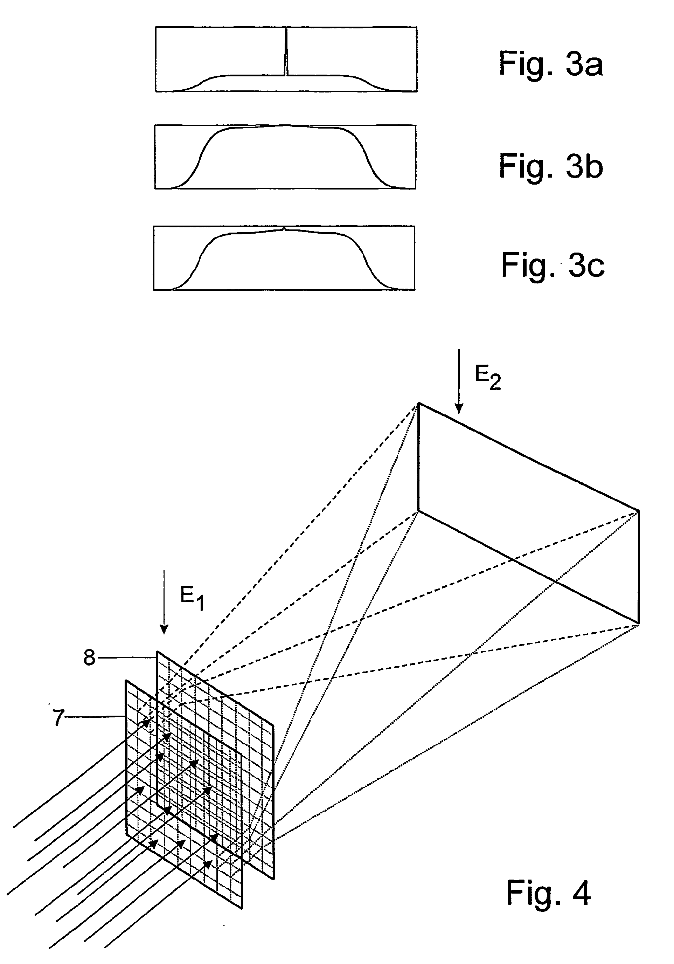

Fig. 3a, b verdeutlichen den Unterschied zwischen Intensitätsprofilen, wenn eine Anordnung, die nur erste diffraktive mikrooptische Homogenisierungsstrukturen 1 enthält (Fig. 3a) und wenn gemäß der Erfindung zwei hintereinander angeordnete diffraktive mikrooptische Homogenisierungsstrukturen 1, 2 (Fig. 3b) benutzt werden, wobei die Profilabweichungen jeweils gleich sind.

Fig. 3c verdeutlicht schließlich ein Ergebnis, wenn beide diffraktiven mikrooptischen Homogenisierungsstrukturen 1, 2 ein gleichgroßes fehlerhaftes Profil aufweisen, so dass daraus eine nullte Beugungsordnung, z. B. von einem Prozent Anteil entsteht.

Zu dem in Fig. 3b dargestellten Intensitätsverlauf ist noch der Strahlungsanteil zu addieren, der sowohl die ersten als auch die zweiten mikrooptischen Homogenisierungsstrukturen 1, 2 ungebeugt passiert. Dieser Anteil besitzt das Winkelspektrum des Primärstrahls, beträgt dann aber nur 0,01%.

Sind die zu erwartenden Intensitäten der nullten Beugungsordnungen bekannt und ihre Lichtstärken weniger als doppelt so groß wie ihre Umgebung, können die in Fig. 3c dargestellten Intensitätsüberhöhungen auch dadurch korrigiert werden, dass in die zweiten diffraktiven mikrooptischen Homogenisierungsstrukturen 2, insbesondere in die Elementfunktion, ein Korrektiv für die zu erwartenden Intensitätsüberhöhungen zu deren Kompensation integriert ist. Das Korrektiv kann z. B. derart ausgebildet sein, dass die Anordnung der diffraktiven Strukturen modifiziert ist, so dass die Elementfunktion eine kompensierende Abweichung vom Sollprofil erzeugt.

Diese Art der Vorkorrektur ist theoretisch auch beim Aufbau mit einer Struktur möglich.

Ist die Lichtstärke der nullten Beugungsordnung aber wie in Fig. 3a z. B. mehr als doppelt so groß wie die Umgebungslichtstärke, ist eine Vorkorrektur nicht möglich.

Eine bevorzugte Ausführungsform für ein optisches System zur Durchführung des erfindungsgemäßen Verfahrens ist in Fig. 4 enthalten, bei der sich die mikrooptischen Homogenisierungsstrukturen 1, 2 auf gegenüberliegenden Oberflächen zweier benachbarter Quarzsubstrate 7, 8 befinden, die mit einem Abstand von wenigen Mikrometern nacheinander angeordnet sind.

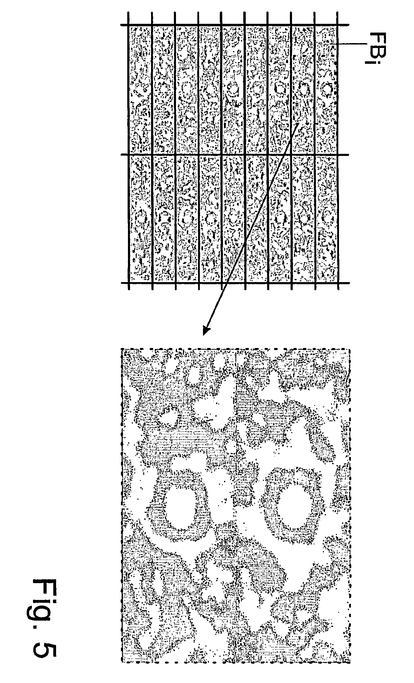

Die beiden diffraktiven mikrooptischen Homogenisierungsstrukturen 1, 2 sind entsprechend der in Fig. 5 enthaltenen Darstellung facettiert, wobei jeder für sich abgegrenzte Facettenbereich FB die zur Realisierung der Strahlformung notwendigen diffraktiven Strukturen enthält, um den Anteil des auftreffenden Strahls in eine vorgegebene Intensitätsverteilung umzuwandeln. In der zweiten Ebene E₂ werden alle von den Facettenbereichen erzeugten Intensitätsverteilungen überlagert und dabei homogenisiert.

Wesentlich ist, dass die Facettenbereiche FBᵢ der beiden benachbarten Quarzsubstrate 7, 8 zur hochgenauen Überdeckung gebracht werden.

Da es durch die diffraktiven Strukturen in der geformten Intensitätsverteilung ungewollt zur Erzeugung gewisser Inhomogenitäten mit einer Feinstruktur bzw. einem Rauschen kommen kann, ist es besonders vorteilhaft, wenn jeder Facettenbereich FBᵢ etwas anders strukturiert ist. Feinstrukturen bzw. Rauschanteile können dadurch unterdrückt werden.

## Patentansprüche

1. Verfahren zur Umwandlung einer primären Intensitätsverteilung in eine vorgegebene, raumwinkelabhängige Intensitätsverteilung durch Erzeugen von ersten und zweiten homogenisierenden mikrooptischen Strukturen (1, 2), wobei die ersten mikrooptischen Strukturen (1) dazu vorgesehen sind, aus der primären Intensitätsverteilung eine feinstrukturierte Amplituden- und Phasenverteilung zu erzeugen und die zweiten mikrooptischen Strukturen (2), aus dieser feinstrukturierten Amplituden- und Phasenverteilung die vorgegebene, raumwinkelabhängige Intensitätsverteilung zu generieren, **dadurch gekennzeichnet, dass**
- die Erzeugung der feinstrukturierten Amplituden- und Phasenverteilung als Nahfeldverteilung (NF) in einer im Nahfeld der ersten mikrooptischen Strukturen (1) befindlichen ersten Ebene (E₁) erfolgt, und dass
- die zweiten, als diffraktive Strukturen ausgebildeten mikrooptischen Strukturen (2) in der ersten Ebene (E₁) angeordnet und zu der Nahfeldverteilung (NF) justiert und angepasst werden, wodurch sich aus der Nahfeldverteilung (NF) die vorgegebene, raumwinkelabhängige Intensitätsverteilung in einer im Fernfeld liegenden zweiten Ebene (E₂) ausbildet.

2. Verfahren nach Anspruch 1, **dadurch gekennzeichnet, dass** mit den ersten mikrooptischen Strukturen (1) in der zweiten Ebene (E₂) eine Intensitätsverteilung erzeugt wird, die sich über einen Raumwinkelbereich erstreckt, der von dem vom Gesamtsystem der ersten und der zweiten mikrooptischen Strukturen (1, 2) umfassten Raumwinkelbereich abweicht.

3. Verfahren nach Anspruch 2, **dadurch gekennzeichnet, dass** die mit den ersten mikrooptischen Strukturen (1) in der zweiten Ebene (E₂) erzeugte Intensitätsverteilung eine Gaußform aufweist und sich über einen Raumwinkelbereich erstreckt, der kleiner ist als der vom Gesamtsystem der ersten und der zweiten mikrooptischen Strukturen (1, 2) umfasste Raumwinkelbereich.

## Claims

1. Method for converting a primary intensity distribution into a predetermined intensity distribution that is dependent on a solid angle, by generating first and second homogenizing micro-optic structures (1, 2), wherein the first micro-optic structures (1) are provided for generating a finely structured amplitude distribution and phase distribution from the primary intensity distribution, and the second micro-optic structures (2) are provided to generate the predetermined, solid angle-dependent intensity distribution from said finely structured amplitude distribution and phase distribution,
**characterized in that**
- the finely structured amplitude distribution and phase distribution is generated as a near field distribution (NF) in a first plane (E₁), which is located in the near field of the first micro-optic structures (1), and that
- the second micro-optic structures (2), which are provided as diffractive structures, are arranged in the first plane (E₁) and are adjusted and adapted with respect to the near field distribution (NF), which causes the predetermined, solid angle-dependent intensity distribution to be formed from the near field distribution (NF) in a second plane (E₂) located in the far field.

2. Method according to claim 1, **characterized in that** an intensity distribution which extends over a solid angle region that deviates from the solid angle region encompassed by the total system of the first and second micro-optic structures (1, 2) is generated by the first micro-optic structures (1) in the second plane (E₂).

3. Method according to claim 2, **characterized in that** the intensity distribution that is generated by the first micro-optic structures (1) in the second plane (E₂) has a Gaussian shape and extends over a solid angle region that is smaller than the solid angle region encompassed by the total system of the first and second micro-optic structures (1, 2).

## Revendications

1. Procédé de conversion d'une distribution d'intensité primaire en une distribution d'intensité prédéterminée, dépendant de l'angle solide, par création de premières et deuxièmes structures microoptiques d'homogénéisation (1, 2), dans lequel procédé lesdites premières structures microoptiques (1) sont destinées à générer une distribution d'amplitudes et de phases finement structurée à partir de la distribution d'intensité primaire, et les deuxièmes structures microoptiques (2) sont destinées à générer ladite distribution d'intensité prédéterminée, dépendant de l'angle solide, à partir de ladite distribution d'amplitudes et de phases finement structurée,
**caractérisé en ce que**
- la distribution d'amplitudes et de phases finement structurée est générée sous la forme d'une distribution dans le champ proche (NF) dans un premier plan (E₁), qui se trouve dans le champ proche desdites premières structures microoptiques (1), et que
- les deuxièmes structures microoptiques (2), qui se présentent sous la forme de structures diffractives, sont disposées dans le premier plan (E1) et sont ajustées et adaptées par rapport à la distribution dans le champ proche (NF), ce qui produit la formation de la distribution d'intensité prédéterminée, dépendant de l'angle solide, à partir de la distribution dans le champ proche (NF), dans un deuxième plan (E₂) qui se trouve dans le champ éloigné.

2. Procédé selon la revendication 1, **caractérisé en ce qu'**une distribution d'intensité est engendrée par les premières structures microoptiques (1) dans le deuxième plan (E₂), ladite distribution d'intensité s'étendant sur une plage d'angles solides qui diffère de la plage d'angles solides compris dans le système entier des premières et deuxièmes structures microoptiques (1, 2).

3. Procédé selon la revendication 2, **caractérisé en ce que** la distribution d'intensité générée par les premières structures microoptiques (1) dans le deuxième plan (E₂) présente une forme gaussienne et s'étend sur une plage d'angles solides d'étendue inférieure à la plage d'angles solides compris dans le système entier des premières et deuxièmes structures microoptiques (1, 2).
